# FASCICULE DE BREVET EUROPEEN

(11) **EP 3 579 025 B1**
(45) Date de publication et mention de la délivrance du brevet: **14.04.2021**
(21) Numéro de dépôt: 18020473.7
(22) Date de dépôt: 28.09.2018
(51) Int. Cl.: G01S 19/11

(54) **PROCÉDÉ ET DISPOSITIF PERMETTANT LA CONTINUITÉ DU SERVICE DE GÉOLOCALISATION À L'INTÉRIEUR DES BÂTIMENTS POUR LES TERMINAUX UTILISANT LES SIGNAUX GNSS**
VERFAHREN UND VORRICHTUNG, DIE DIE KONTINUITÄT DES GEOLOKALISIERUNGSDIENSTES IM INNERN VON GEBÄUDEN FÜR DIE ENDGERÄTE ERMÖGLICHT, DIE GNSS-SIGNALE NUTZEN
METHOD AND DEVICE FOR CONTINUITY OF THE GEOLOCATION SERVICE INSIDE BUILDINGS FOR TERMINALS USING GNSS SIGNALS

(30) Priorité: 05.06.2018 FR 1870652
(43) Date de publication de la demande: 11.12.2019
(73) Titulaire: Les Intelligences Naturelles, 31071 Toulouse Cedex 7 (FR)
(72) Inventeur: Legrand, Fabrice, 31430 St-Elix-le-Chateau (FR)

(56) Documents cités:
- US-B1- 6 201 497
- IM SUNG-HYUCK ET AL: "Indoor Navigation and Multipath Mitigation using Code-Offset Based Pseudolite Transmitter Array", ITM 2010 - PROCEEDINGS OF THE 2010 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 27 janvier 2010 (2010-01-27), pages 259-263, XP056002115,

## Description

La présente invention concerne un procédé et un dispositif permettant la géolocalisation précise des personnes et des biens à l'intérieur de bâtiments ou de toute zone complètement ou partiellement étanche aux ondes radioélectriques, dites zones blanches ou grises, via l'utilisation de terminaux de navigation et de géolocalisation compatibles des signaux de radionavigation (signaux radioélectriques de navigation) émis par les Systèmes Globaux de Navigation par Satellites (GNSS pour Global Navigation per Satellite Systems) tels qu'entre autres GPS, GLONASS, GALILEO et BEIDOU, ainsi que par les systèmes d'augmentations SBAS (Space Based Augmentation Systems) tels qu'entre autres EGNOS, WAAS et MSAS.

L'état de la technique antérieure est décrit ci-après.

Il est connu de l'état de l'art de la technique (tel que décrit par exemple dans [Kaplan, Elliott D. et al. (2006). Understanding GPS Principles and Applications, 2nd édition. Editeur : ARTECH HOUSE INC.]) que la détermination de la Position, de la Vitesse et du Temps (PVT) en tout endroit où il est possible de recevoir les signaux radioélectriques émis par les Systèmes Globaux de Navigation par Satellites (ou GNSS pour Global Navigation per Satellite Systems, tels que GPS, GLONASS, GALILEO ou BEIDOU) peut être réalisée par des traitements selon l'état de l'art de ces mêmes signaux GNSS par un instrument de mesure, dit récepteur GNSS standard, qui intègre des ressources pour la réception et le traitement analogique et numérique des signaux radioélectriques GNSS.

Il est également connu de l'état de l'art de la technique que la détermination de la PVT par un récepteur GNSS standard est réalisée par la résolution d'équations dites équations de navigation construites pour un nombre suffisant de satellites GNSS (au moins quatre pour une PVT mono-constellation) à partir :
- de mesures dites de pseudodistance connue de l'état de l'art comme étant la distance géométrique entre le récepteur et le satellite GNSS entachée d'erreurs liées à la propagation des ondes au travers des couches atmosphériques (retards ionosphérique et troposphérique), au biais d'horloge et temps de propagation de groupe dans le satellite GNSS, aux effets relativistes, aux effets des réflexions des ondes sur les structures physiques situées autour du récepteur, ainsi qu'au biais d'horloge et au temps de propagation de groupe du récepteur, mesures élaborées par le récepteur à partir de mesures dites de phase de code et de porteuse ;
- de mesures dites de pseudovitesse connue de l'état de l'art comme étant la vitesse relative vraie entre le récepteur et le satellite GNSS entachée d'erreurs liées à la propagation des ondes au travers des couches atmosphériques (diffraction ionosphérique), au biais de fréquence de l'horloge du satellite GNSS, aux effets relativistes, ainsi qu'au biais de fréquence de l'horloge du récepteur, meures élaborées par le récepteur à partir de mesures de biais de fréquence de porteuse, dites mesures Doppler ;
- de la connaissance de la position et de la vitesse des satellites GNSS qui sont calculées à partir des paramètres d'orbitographie transmis périodiquement dans les messages dits messages de navigation sous la forme d'un code binaire modulé sur chacun des signaux radioélectriques émis par les satellites GNSS ;
- de la connaissance des paramètres de correction des composantes d'erreurs systèmes et atmosphériques dans les mesures de pseudodistance et de pseudovitesse qui sont calculées à partir de paramètres spécifiques transmis périodiquement dans lesdits messages de navigation sous la forme d'un code binaire modulé sur chacun des signaux radioélectriques émis par les satellites GNSS.

Lesdites équations de navigation sont résolues classiquement par la méthode des moindres carrés ou par filtrage de Kalman.

Les caractéristiques des signaux permettant au récepteur de discriminer les satellites GNSS émetteurs, de réaliser les mesures de pseudodistance et de pseudovitesse, ainsi que de démoduler et de reconstituer les paramètres d'orbitographie transmis dans les messages de navigation, sont connues du domaine public pour les signaux GNSS dits ouverts au travers de documents normatifs de définition d'interface connus sous la dénomination générique d'ICD (pour « Interface Control Documents » en langue anglaise), dont on peut citer : [Global Positioning Systems Directorate, Systems Engineering & Integration. (2013). Interface Specification (IS-GPS-200), Navstar GPS Space Segment/Navigation User Interfaces. Editeur : Global Positioning Systems Directorate, Systems Engineering & Integration], [Global Positioning Systems Directorate, Systems Engineering & Integration. (2013). Interface Specification (IS-GPS-705), Navstar GPS Space Segment/User Segment L5 Interfaces. Editeur : Global Positioning Systems Directorate, Systems Engineering & Integration] et [Global Positioning Systems Directorate, Systems Engineering & Integration. (2013). Interface Spécification (IS-GPS-800), Navstar GPS Space Segment/User Segment L1C Interfaces. Editeur : Global Positioning Systems Directorate, Systems Engineering & Integration] pour les signaux ouverts du système GPS ; [European Union. (2016). European GNSS (GALILEO) Open Service, Signal-in-Space Interface Control Document, OS SIS ICD Issue 1.3. Editeur : European Union] pour les composantes des services ouverts (Open Services) du système GALILEO ; [Russian Institute of Space Device Engineering. (2008). GLONASS, INTERFACE CONTROL DOCUMENT Navigational radiosignal In Bands L1, L2 (Edition 5.1). Editeur : Russian Institute of Space Device Engineering] pour les signaux ouvert du système GLONASS ; et [China Satellite Navigation Office. (2013). BeiDou Navigation Satellite System, Signal In Space Interface Control Document, Open Service Signal (Version 2.0), BDS-SIS-ICD-2.0. Editeur : China Satellite Navigation Office] pour les signaux ouverts du système BEIDOU.

Les signaux GNSS étant reçus sur Terre avec des niveaux de puissance relativement faibles (de l'ordre de -160dBW en ciel ouvert, selon les documents normatifs ICD référencés dans le chapitre précédent), il est connu de l'état de la technique que la réception des signaux GNSS est difficile voir impossible lorsque les terminaux de réception sont situés à l'intérieur des bâtiments, ou plus généralement dans des zones tout ou partie étanches aux ondes radioélectriques émises par les satellites GNSS, dites zones GNSS blanches ou grises. On peut citer par exemple les travaux rapportés dans [Kjaergaard, Mikkel Braun et al. (2010). Indoor Positioning Using GPS Revisited. Proceedings of the 8th International Conference, Pervasive 2010, Helsinki, Finland, May 17-20, 2010. Extrait de Pervasive 2010, LNCS 6030, pp. 38-56, 2010. Editeurs : P. Floréen, A. Krüger, and M. Spasojevic., Springer-Verlag Berlin Heidelberg 2010]) qui, au travers d'une intense campagne de mesures réalisées avec différents types de récepteurs GPS à l'intérieur de huit bâtiments différents ayant chacun leurs caractéristiques géométriques et leurs matériaux propres, montrent que même pour les récepteurs les plus sensibles dans l'état de l'art de la technique actuelle (récepteurs dits haute-sensibilité, disposant de fonctionnalité de type GPS assisté ou « Assisted-GPS » en langue anglaise), l'importante atténuation sur la puissance des signaux reçus ainsi que la mauvaise géométrie dans les zones où quelques satellites sont visibles induisent une forte dégradation des performances sur la précision de la géolocalisation (d'une précision de l'ordre du mètre à l'extérieur, on passe facilement de une à plusieurs dizaines de mètres à l'intérieur) ainsi que sur le temps de fourniture de la première solution PVT (« Time To First Fix » en langue anglaise) à la mise en route du récepteur.

Cette échelle d'incertitude à l'intérieur des bâtiments (plusieurs dizaines de mètres d'erreur) rend la fonction de géolocalisation des récepteurs GNSS standard inexploitable pour bon nombre d'applications qui requièrent de la précision.

La problématique du positionnement en intérieur (ou « indoor positioning » en langue anglaise) à l'aide de récepteurs GNSS standard est un sujet très étudié par la communauté scientifique du GNSS car étant toujours à ce jour un problème non universellement résolu. L'état de l'art des solutions proposées peut être classé en trois catégories principales, à savoir :
1/ les solutions mises en œuvre au niveau du récepteur GNSS et des algorithmes du traitement du signal dont l'objectif est d'améliorer la sensibilité du récepteur de sorte qu'il soit capable de fournir des mesures sur des signaux reçus à très faible puissance ; on peut citer par exemple les techniques connues de l'état de l'art dites aidées par des données externes (tel que par exemple la techniques dite du « Data wipe-off » ou l'« Assisted-GNSS ») ou par des capteurs externes (tels que les composants IMU (pour « Inertial Measurement Units ») présents dans les terminaux mobiles) ou par des signaux dit d'opportunités (tels que des signaux WiFi ou de téléphonie mobile) qui vont permettre par diverses méthodes d'hybridation notamment d'allonger les temps d'intégration cohérente dans les boucles de poursuite de phase et ainsi d'augmenter la sensibilité du récepteur. Ces solutions présentent l'avantage d'assurer une certaine continuité de la provision de solutions PVT mais ont l'inconvénient de fournir un niveau de performance qui reste faible, d'une part à cause du faible rapport de puissance signal-sur-bruit qui influe directement sur la variance du bruit dans les mesures de phase de code, et d'autre part à cause de la faible qualité des capteurs inertiels intégrés dans les terminaux mobiles grand public ;
2/ les solutions basées sur des répéteurs des signaux GNSS reçus à l'extérieur et retransmis à l'intérieur, solutions présentant l'inconvénient soit de résulter en un calcul d'une position erronée par le récepteur (à savoir la position constante de l'antenne située à l'extérieur, ceci quelque soit la position du récepteur dans le bâtiment) dans le cas de l'utilisation d'un répéteur unique, soit de nécessiter l'utilisation d'un récepteur non-standard intégrant des algorithmes et moyens spécifiquement adaptés aux particularités du système dans le cas de l'utilisation de répéteurs multiples (on peut citer ici les travaux rapportés dans [Fluerasu, Anca et al. (2009). GNSS Repeater Based Approach for Indoor Positioning: Current Status. Proceedings of the European Navigation Conférence on Global Navigation Satellite Systems, ENC-GNSS 2009, May 2009, Naples, Italy, pp.1-12. Editeur : ENC-GNSS; ou encore le document US 6 201 497 B1);
3/ les solutions basées sur des pseudolites (ou pseudo-satellites) ou simulateurs de signaux avec comme inconvénients soit de devoir utiliser des récepteurs spécifiques (si les signaux produits sont non-standards, on peut citer par exemple les travaux rapportés dans [Kee, C. and Al. (2003). Indoor Navigation System using Asynchronous Pseudolites. Journal of Navigation, 56, pp 443-455. Editeur : Cambridge Core]), soit de ne permettre qu'un positionnement par zone sans précision absolue dans la zone en question (on peut par exemple citer ici le dispositif connu de l'état de la technique ayant fait l'objet de la demande de brevet US 2016/0320491 A1 [Methods of indoor location using GNSS simulators and devices thereof]).

Les techniques de positionnement en intérieur par des moyens autres que le GNSS (telles que par exemple le WiFi Positioning System ou l'Ultra Wide Band) ne sont volontairement pas abordées ici, car étant hors du sujet de la présente invention qui concerne un procédé compatible du traitement des signaux GNSS.

L'objet de l'invention est décrit ci-après, et défini par les revendications indépendantes, les revendications dépendantes portant sur des modes de réalisation préférés.

L'invention constitue une amélioration considérable de l'état de l'art de la technique en ce sens qu'elle permet un positionnement précis (de l'ordre du centimètre à quelques mètres) et absolu (selon un référentiel standard tel que par exemple le WGS84 ou tout autre référentiel fixe par rapport à la surface de la Terre) avec un terminal dit récepteur GNSS standard (c'est-à-dire n'intégrant aucune fonction supplémentaire par rapport à celles requises selon l'état de l'art de la technique tel qu'exposé au début du présent document) ou non-standard (c'est-à-dire intégrant des fonctions supplémentaires permettant de bénéficier de services ou augmentations associés à l'invention tels que revendiqués et décrits plus loin dans la description de l'invention) à l'intérieur d'un bâtiment (ou de toute zone de faible ou non visibilité des satellites GNSS dites zones blanches ou grises telles que des centres commerciaux, des centres de stockage et de manutention de biens, des entrepôts, des halls d'aéroport ou de gares ferroviaires ou routières, des parkings souterrains ou couverts, des centres de production, des musées, des salles de spectacles, des casinos, des halls d'exposition, des tunnels, des musées, ou tout autre espace présentant les caractéristiques desdites zones blanches ou grises) sans discontinuité du service de géolocalisation entre l'intérieur et l'extérieur dudit bâtiment (ou de ladite zone blanche ou grise) où l'invention est mise en œuvre, selon un procédé innovant de production de signaux synthétiques :
1/ dont les caractéristiques sont telles qu'ils sont compatibles des terminaux GNSS standards (conformité aux documents normatifs ICD);
2/ générés de façon à rester cohérents en phase et en puissance dans l'espace avec les signaux réels reçus depuis les satellites GNSS visibles à l'extérieur dudit bâtiment (ou de ladite zone blanche ou grise);
3/ rayonnés selon un procédé, dit procédé d'émission selon l'invention, permettant de créer des plans de phase constants selon la même direction que celle des signaux réels reçus depuis les satellites GNSS visibles à l'extérieur dudit bâtiment (ou de ladite zone blanche ou grise), et ainsi d'émuler des champs d'ondes électromagnétiques lointains par des sources champs proches.

L'invention est décrite ci-après.

Selon la théorie des champs lointains, les ondes radioélectriques (105-i) émises par une source lointaine telle qu'un satellite GNSS (104-i), arrivent au niveau d'un récepteur (101) et de la zone alentour au récepteur (101) en étant colinéaires les unes par rapport aux autres et dirigées selon la direction opposée aux angles d'élévation et d'azimut selon lesquels le satellite émetteur est vu depuis la zone de réception. Le procédé objet de l'invention consiste à générer dans la zone de masquage ou de faible visibilité des satellites GNSS, dite zone blanche ou grise (102), au moins une onde synthétique (110-k) par au moins un générateur de signaux synthétiques (106-k) selon la même direction et avec les mêmes caractéristiques de phase et de puissance que l'onde réelle (105-i) de façon à ce qu'un récepteur standard (107-1) présent dans ladite zone blanche ou grise (102) puisse réaliser des mesures brutes de pseudodistance et de pseudovitesse cohérentes avec celles qu'il réaliserait sur ce même satellite si les structures de masquage n'existaient pas, et ainsi calculer sa PVT quelle que soit sa position dans la zone.

Ceci est réalisé selon le procédé objet de la présente invention qui est décrit ci-après :

Un récepteur GNSS standard dit récepteur GNSS de référence (101) constitué d'une antenne de réception d'onde radiofréquence dans la bande L (112) et d'un étage de traitement des signaux GNSS selon l'état de l'art est placé en un point géoréférencé situé à l'extérieur de ladite zone blanche ou grise (102) dans une zone de ciel ouvert de façon à pouvoir capter les signaux émis (105-i) par la plupart des satellites GNSS (104-i) visibles sur la zone et, de préférence, en un endroit où les mesures réalisées par le récepteur GNSS de référence (101) seront peu sujettes à des effets environnementaux pouvant les dégrader tels que, par exemple, la présence prés de l'antenne (112) de réflecteurs radioélectriques ou bien de sources d'interférence radioélectriques.

Ledit récepteur GNSS standard (101) reçoit les ondes radioélectriques (105-i) transmises par les satellites GNSS (104-i) visibles sur la zone via son antenne (112), puis réalise les traitements des signaux GNSS selon l'état de l'art afin de produire les observables et mesures standard, dites mesures brutes produites par le récepteur GNSS de référence, ceci sur chacun des signaux reçus de chacun des satellites GNSS visibles, à savoir : 1/ les angles d'élévation et d'azimut selon lesquels le satellite émetteur est vu depuis l'endroit du centre de phase de l'antenne dudit récepteur GNSS de référence ; 2/ les paramètres d'éphéméride des satellites GNSS tels que spécifiés dans les documents normatifs ICD ; 3/ les mesures brutes de pseudodistance ; 4/ les mesures brutes de pseudovitesse ; 5/ les mesures de glissement du code sur la porteuse résultant de la différence entre la mesure d'écart Doppler réalisée sur le code et celle réalisée sur la porteuse ; 6/ les mesures brutes de phase de porteuse ; 7/ les mesures du rapport de la puissance du signal reçu sur la densité spectrale de bruit ; 8/ un signal de synchronisation sur le temps GNSS.

Lesdites mesures brutes produites par ledit récepteur GNSS de référence (101) sont alors utilisées pour déterminer en des points de l'espace situés à l'intérieur de ladite zone blanche ou grise (102), points dits centres de phase des antennes des générateurs de signaux synthétiques selon l'invention, et par un procédé objet de l'invention et décrit ci-après, lesdites caractéristiques des signaux synthétiques, dits signaux synthétiques selon l'invention, caractérisés en ce qu'ils sont compatibles des terminaux de navigation et de localisation utilisant des signaux GNSS à savoir : 1/ qu'ils sont modulés en CDMA (pour « Code Division Multiple Access ») ou FDMA (pour « Frequency Division Multiple Access ») par des séquences pseudo-aléatoires connues du domaine public et caractérisées dans les documents normatifs ICD, séquences caractéristiques des systèmes GNSS ; 2/ qu'ils sont modulés par des messages constitués de flux binaires codant des données numériques selon des spécifications connues du domaine public et caractérisées dans les documents normatifs ICD, messages caractéristiques des systèmes GNSS ; 3/ qu'ils sont modulés sur des porteuses radioélectriques dont les fréquences connues du domaine public au travers des documents normatifs ICD sont caractéristiques des systèmes GNSS.

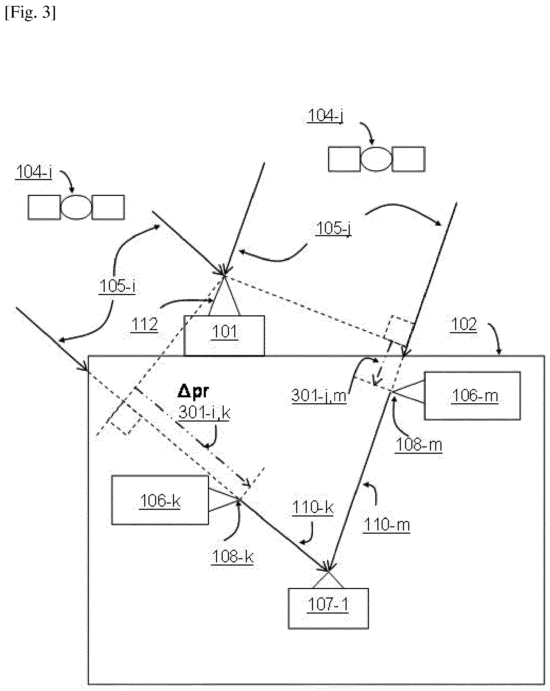

Lesdites caractéristiques des signaux synthétiques selon l'invention calculées auxdits centres de phase des antennes des générateurs de signaux synthétiques selon l'invention sont les suivantes : 1/ la direction du vecteur directeur de l'onde ; 2/ la phase du code d'étalement de spectre associé à la modulation CDMA ou FDMA; 3/ la phase de la porteuse ; 4/ le rapport de la puissance du signal sur la densité spectrale de bruit ; 5/ la dérivée de la phase du code, ou effet Doppler sur le code ; 6/ la dérivée de la phase de porteuse, ou effet Doppler sur la porteuse. Ces six caractéristiques sont déterminées selon le procédé suivant :
1/ La caractéristique de direction du vecteur directeur de l'onde auxdits centres de phase des antennes des générateurs de signaux synthétiques est calculée selon le procédé suivant : le vecteur directeur de l'onde est déterminé comme étant un vecteur unitaire dont la direction est opposée à celle du vecteur ayant les mêmes angles d'élévation et d'azimut que ceux mesurés par le récepteur GNSS de référence pour le satellite GNSS en question. Le vecteur directeur résultant du procédé est caractérisé par des coordonnées dans un référentiel local-horizontal local-vertical comme par exemple le référentiel NED (pour North East Down) dont les coordonnées permettent de caractériser la direction du vecteur par les écarts angulaires par rapport respectivement au Nord géographique, à l'Est géographique et à la verticale.
2/ La caractéristique de phase du code auxdits centres de phase des antennes des générateurs de signaux synthétiques est calculée selon le procédé suivant : comme cela est illustré sur la [Fig. 3], la phase du code du signal qui serait reçu depuis le satellite GNSS (104-i) à l'endroit du centre de phase de l'antenne (108-k) du générateur de signal synthétique (106-k) est déterminée comme étant la somme de la phase du code à l'endroit du centre de phase de l'antenne dudit récepteur GNSS de référence (101) à laquelle on ajoute (s'il s'agit d'un retard de phase) ou on déduit (s'il s'agit d'une avance de phase) la variation de phase résultant du parcours de l'onde à la vitesse de la lumière sur la distance Δpr (301-i,k) correspondant à la norme du vecteur résultant de la projection orthogonale du vecteur prenant source à l'endroit du centre de phase de l'antenne (112) dudit récepteur GNSS de référence (101) et se terminant à l'endroit du centre de phase de l'antenne (108-k) du générateur de signal synthétique (106-k) sur la droite passant par l'endroit du centre de phase de l'antenne (108-k) du générateur de signal synthétique (106-k) et qui est colinéaire au vecteur directeur de l'onde reçue sur le centre de phase de l'antenne du récepteur GNSS de référence, celui-ci étant déterminé selon le procédé décrit précédemment au point 1.
3/ La caractéristique de phase de porteuse auxdits centres de phase des antennes des générateurs de signaux synthétiques est calculée selon le procédé suivant : comme cela est illustré sur la [Fig. 3], la phase de la porteuse du signal qui serait reçu depuis le satellite GNSS (104-i) à l'endroit du centre de phase de l'antenne (108-k) du générateur de signal synthétique (106-k) est déterminée comme étant la somme de la phase de la porteuse à l'endroit du centre de phase de l'antenne (112) dudit récepteur GNSS de référence (101) à laquelle on ajoute (s'il s'agit d'un retard de phase) ou on déduit (s'il s'agit d'une avance de phase) la variation de phase résultant du parcours de l'onde à la vitesse de la lumière sur la distance Δpr (301-i,k) correspondant à la norme du vecteur résultant de la projection orthogonale du vecteur prenant source à l'endroit du centre de phase de l'antenne dudit récepteur GNSS de référence (101) et se terminant à l'endroit du centre de phase de l'antenne (108-k) du générateur de signal synthétique (106-k) sur la droite passant par l'endroit du centre de phase de l'antenne (108-k) du générateur de signal synthétique (106-k) et qui est colinéaire au vecteur directeur de l'onde reçue sur le centre de phase de l'antenne du récepteur GNSS de référence, celui-ci étant déterminé selon le procédé décrit précédemment au point 1.
4/ La caractéristique de rapport de la puissance du signal sur la densité spectrale de bruit auxdits centres de phase des antennes des générateurs de signaux synthétiques est calculée de la manière suivante : la différence de distance Δpr (301-i,k) susceptible d'être parcourue par l'onde entre le centre de phase de l'antenne (112) du récepteur GNSS de référence (101) et le centre de phase (108-k) du générateur de signal synthétique (106-k) étant négligeable devant la distance parcourue par l'onde entre le satellite GNSS (104-i) et le récepteur GNSS de référence, on peut considérer que la différence de perte en espace libre entre les deux points est également négligeable et, ainsi, que la puissance qui serait reçue à l'endroit du centre de phase de l'antenne (108-k) du générateur de signal synthétique (106-k) est quasiment identique à celle reçue à l'endroit du centre de phase de l'antenne du récepteur GNSS de référence (101). Ainsi, la caractéristique de rapport de la puissance du signal sur la densité spectrale de bruit à l'endroit du centre de phase de l'antenne (108-k) du générateur de signal synthétique (106-k) est déterminée comme étant la même que celle mesurée par le récepteur GNSS de référence (101) à l'endroit du centre de phase de son antenne (112).
5/ La caractéristique de dérivée de la phase du code, ou effet Doppler sur le code, auxdits centres de phase des antennes des générateurs de signaux synthétiques est identique à celle mesurée par le récepteur GNSS de référence (101) à l'endroit du centre de phase de son antenne.
6/ la dérivée de la phase de porteuse, ou effet Doppler sur la porteuse, auxdits centres de phase des antennes des générateurs de signaux synthétiques est identique à celle mesurée par le récepteur GNSS de référence (101) à l'endroit du centre de phase de son antenne.

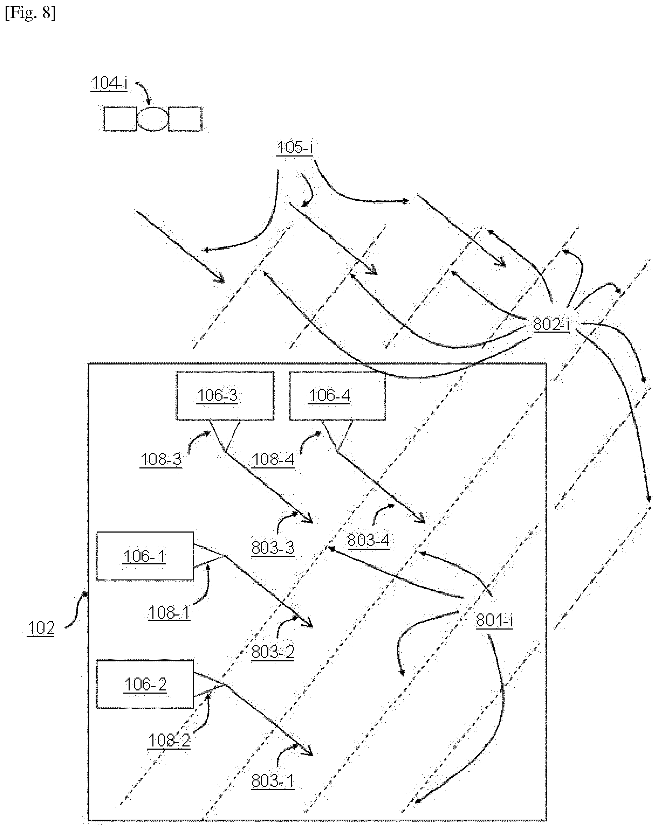

Des signaux synthétiques, dits signaux synthétiques selon l'invention, ayant lesdites caractéristiques des signaux synthétiques selon l'invention déterminées selon le procédé décrit ci-avant, ainsi qu'ayant les caractéristiques décrites précédemment les rendant compatibles des récepteurs GNSS standards conformément aux documents normatifs ICD, sont alors rayonnés auxdits centres de phase des antennes de chacun desdits générateurs de signaux synthétiques sous la forme d'ondes radioélectriques. Les ondes radioélectriques sont émises par des sources multifaisceaux dont le diagramme de rayonnement est adapté de sorte que la combinaison dans l'espace des ondes relatives à un satellite GNSS donné produise un signal synthétique ayant un front d'onde plan perpendiculaire au vecteur directeur du signal réel émis par le satellite GNSS en question, ainsi que des caractéristiques de phase dans l'espace identiques à celles qu'auraient le signal réel dans ce même espace. L'effet de ce procédé de synthèse est illustré pour un seul satellite GNSS sur la [Fig. 8] sur laquelle est représentée la cohérence entre les plans des fronts d'ondes (802-i) des signaux radioélectriques (105-i) reçus depuis un satellite GNSS (104-i) visible à l'extérieur de la zone blanche (102) et les plans des fronts d'ondes (801-i) résultant de la recombinaison des signaux synthétiques (803-k) générés selon l'invention.

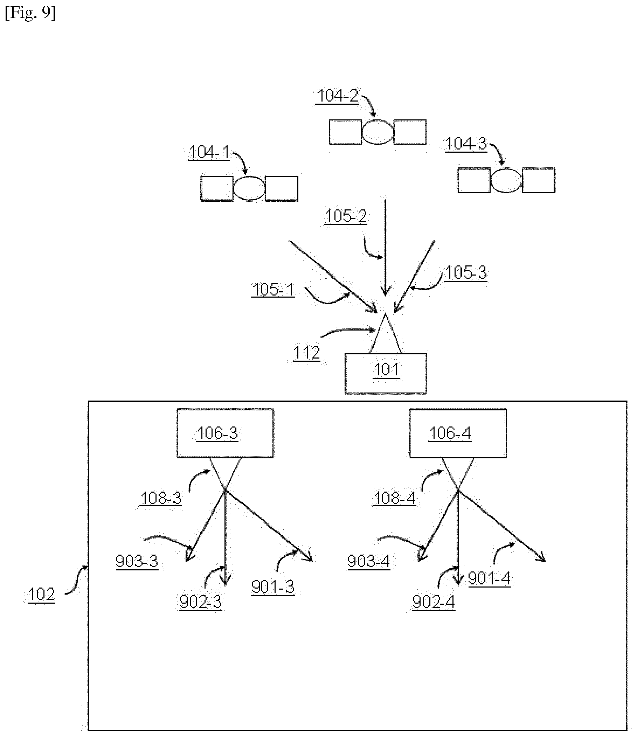

Le signal synthétique composite produit par un générateur de signal synthétique donné est constitué de plusieurs composantes. Chacune des composantes est associée à un faisceau de la source d'émission multifaisceaux du générateur dans lequel un signal synthétique caractéristique d'un satellite GNSS donné est émis dans la direction du vecteur directeur et avec toutes les caractéristiques (phase de code, phase de porteuse, puissance, Doppler code et Doppler porteuse) associées à la composante en question et déterminées selon le procédé décrit ci-avant donnant lieu auxdites caractéristiques des signaux synthétiques selon l'invention. Ainsi, le signal synthétique composite produit par un générateur de signal synthétique donné est constitué de la somme de plusieurs signaux synthétiques caractéristiques de satellites GNSS émis dans les différentes directions correspondant aux directions des vecteurs directeurs déterminés selon le procédé décrit ci-avant donnant lieu auxdites caractéristiques des signaux synthétiques selon l'invention. L'effet de ce procédé est illustré sur la [Fig. 9] dans le cas où les signaux émis par trois satellites GNSS (104-1 à 104-3) sont reçus sur l'antenne (112) du récepteur GNSS de référence (101) selon trois directions distinctes (105-1 à 105-3) et donnent lieu, selon le procédé objet de l'invention, à la génération par deux générateurs de signaux synthétiques (106-3 et 106-4) de deux signaux synthétiques composites formés, pour chacun des générateurs de signaux, de trois composantes émises selon les mêmes directions que les signaux GNSS réels reçus.

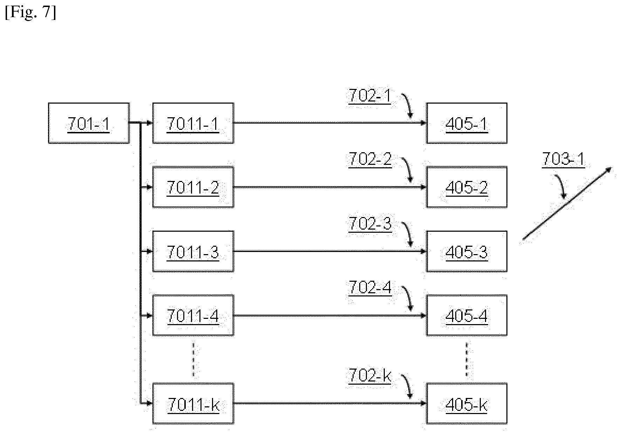

Un faisceau d'émission, caractérisé par une direction et par une ouverture, est élaboré selon le procédé suivant : comme cela est illustré sur la [Fig. 7], le procédé consiste à faire rayonner sur un ensemble de k éléments rayonnants isotropes (405-1 à 405-k) des versions pondérées et déphasées (702-1 à 702-k) d'une composante donnée (701-1) du signal synthétique produit par un générateur de signal synthétique donné. Les valeurs des coefficients complexes de pondération et de déphasage (7011-1 à 7011-k) à appliquer pour chacun des éléments rayonnants sont calculées de sorte que l'onde électromagnétique résultant de la combinaison des ondes émises par tous les éléments rayonnants soit émise dans une direction de l'espace (703-1) qui est contrôlée.

Ce procédé est connu de l'état de l'art de la technique comme étant une Antenne en Réseau Phasé (en langue anglaise « Phased Array Antenna »), et différentes techniques de synthèse des coefficients complexes à appliquer pour approcher le diagramme de rayonnement d'une consigne donnée, techniques dites de formation de faisceau (ou « beam forming » en langue anglaise), sont connues du domaine public. Des méthodes sont données par exemple dans [Mailloux, Robert J. (2005). Phased array antenna handbook, 2nd édition. Editeur : ARTECH HOUSE INC.] ou dans [Boizard, Jean-Louis et al. (1998). Optimizing the directivity diagram of underwater acoustic wide band antennas. Proceedings of the 1998 International Symposium on Underwater Technology, Tokyo, Japan, 17 April 1998.]. Néanmoins, ce procédé n'a, à notre connaissance, jamais été utilisé pour émuler des champs d'ondes lointains par des sources champs proches comme c'est le cas dans l'objet de la présente invention.

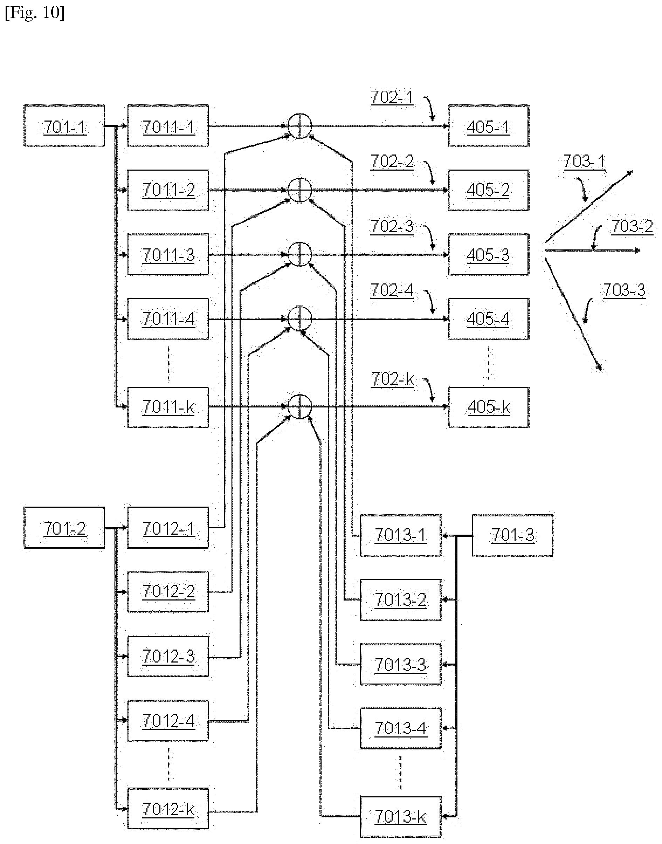

Le procédé décrit ci-avant dans le cas d'une seule composante est généralisé de manière à produire plusieurs faisceaux d'émission adaptés aux caractéristiques de directivité des différentes composantes du signal composite produit par un générateur de signaux synthétiques : comme cela est illustré sur la [Fig. 10] dans le cas d'un signal synthétique composite composé de trois composantes, chacun des k éléments rayonnants isotropes (405-1 à 405-k) est alimenté par les sommes (702-1 à 702-k) des versions pondérées et déphasées par application de gains complexes (7011-1 à 7013-k) sur les composantes (701-1 à 701-3) du signal synthétique produit par un générateur de signal synthétique donné. Les coefficients complexes (7011-1 à 7013-k) sont calculés de sorte que l'onde électromagnétique résultant de la combinaison des ondes émises par tous les éléments rayonnants soit composée d'ondes correspondant à chacune des composantes (701-1 à 701-3) du signal composite émises dans des directions (703-1 à 703-3) de l'espace qui sont contrôlées et qui correspondent aux directions des vecteurs directeurs caractéristiques de chaque composante desdites caractéristiques des signaux synthétiques selon l'invention calculées audits centre de phase de l'antenne du générateur de signaux synthétiques en question telles que déterminées selon le procédé décrit plus haut dans l'exposé.

Il est à noter que le procédé d'émission multifaisceaux contrôlée décrit précédemment peut être substitué par un autre procédé consistant à utiliser un ensemble de sources ayant une directivité fixe dont on contrôle la directivité en modifiant individuellement leur orientation par un moyen mécanique. Selon ce procédé, chacune des composantes du signal composite dudit générateur de signaux synthétiques est assignée à une source. Il faudra donc autant de sources qu'il y a de composantes dans le signal composite.

Enfin, lesdits générateurs de signaux synthétiques munis de sources d'émission à faisceaux multiples tels que décrits précédemment, dites bornes de génération de signaux synthétiques selon l'invention, sont positionnés avantageusement les unes par rapport aux autres de manière à ce que, de par le procédé objet de l'invention et décrit précédemment, les ondes produites par lesdites bornes de génération de signaux synthétiques selon l'invention se recombinent avantageusement dans l'espace de façon à produire des fronts d'onde plans selon les mêmes directions et avec les mêmes caractéristiques de phases et de puissances que les ondes réelles issues des satellites GNSS en visibilité à l'extérieur de ladite zone blanche ou grise, ceci de façon à ce qu'un récepteur GNSS standard présent dans ladite zone blanche ou grise puisse réaliser des mesures brutes de pseudodistance et de pseudovitesse cohérentes avec celles qu'il réaliserait sur ces mêmes satellites si les structures de masquage n'existaient pas, et ainsi calculer sa PVT quelle que soit sa position dans la zone.

Une alternative de l'invention est décrite ci-après : de manière alternative, lesdits signaux synthétiques selon l'invention peuvent contenir des messages spécifiques, dits messages propriétaires, sous la forme de données numériques codées selon un procédé quelconque et intégrées dans les trames de données modulées sur lesdits signaux synthétique selon l'invention. Pour rester compatible des récepteurs GNSS standard, les données numériques codant lesdits messages propriétaires sont substituées aux données des trames des messages de navigation GNSS connues du domaine public au travers des documents normatifs ICD comme étant réservées ou inutilisées par les récepteurs GNSS standard utilisant les services ouverts.

Les principaux avantages de l'invention sont les suivants :

Avantageusement, le système permet la géolocalisation précise ainsi que la détermination de la vitesse et du temps à l'intérieur des bâtiments avec un terminal GNSS standard, là où les signaux GNSS sont peu ou pas visibles.

De manière avantageuse, le système ne génère pas d'interférence avec les signaux GNSS réels car le procédé objet de l'invention assure que les signaux synthétiques sont toujours en phase avec les signaux réels et qu'ils véhiculent les mêmes données utiles (messages de navigation GNSS) quelle que soit la position de l'utilisateur.

L'invention permet avantageusement d'assurer la transition entre les espaces intérieurs et extérieurs sans interrompre le service de géolocalisation par GNSS pour les utilisateurs, évitant ainsi la mise en œuvre de processus de ré-acquisition dans le récepteur GNSS, et assurant la continuité du service de géolocalisation.

Une alternative de l'invention permet avantageusement de transmettre des messages spécifiques, dits messages propriétaires, aux usagers de la zone où l'invention est mise en œuvre, à condition qu'ils soient munis d'un récepteur spécifique capable de décoder lesdits messages propriétaires. Ces messages propriétaires peuvent être locaux ou globaux, communs ou adressés à des utilisateurs particuliers, et à caractère informatif généraliste ou d'urgence, commercial, ou de tout autre ordre.

Les dessins annexés illustrent l'invention :
La [Fig. 1] illustre l'architecture globale du procédé mis en œuvre selon l'invention.
La [Fig. 2] illustre l'algorithme mis en œuvre dans ledit calculateur (103) selon l'invention.
La [Fig. 3] illustre les relations de phase entre les signaux GNSS réels et les signaux synthétiques produits aux emplacements des centres de phase des antennes desdits générateurs de signaux synthétiques.
La [Fig. 4] illustre l'architecture d'une instance dudit générateur de signaux synthétiques selon l'invention.
La [Fig. 5] illustre un exemple type de présence ou d'absence de vecteur directeur (501) d'une onde reçue (105) depuis un satellite (104) dans le champ de rayonnement (502) des générateurs de signaux synthétiques (106) selon l'invention.
La [Fig. 6] illustre une implémentation alternative de l'algorithme représenté sur la [Fig. 2] dont la mise en œuvre est distribuée entre ledit calculateur (103) et lesdits générateurs de signaux synthétiques (106).
La [Fig. 7] illustre le procédé d'émission des signaux synthétiques selon un faisceau contrôlé.
La [Fig. 8] illustre la cohérence entre les plans des fronts d'ondes (802-i) d'un signal (105-i) reçu depuis un satellite GNSS (104-i) visible à l'extérieur de la zone blanche (102) et les plans des fronts d'ondes (801-i) résultant de la recombinaison des signaux synthétiques (803) générés selon l'invention.
La [Fig. 9] illustre l'effet du procédé d'émission multifaisceaux selon l'invention.
La [Fig. 10] illustre le procédé d'émission multifaisceaux contrôlés des signaux synthétiques selon l'invention.

Dans toutes les figures, les éléments communs portent les mêmes numéros de référence.

En référence à ces dessins, un mode de réalisation de l'invention, donné à titre illustratif et nullement limitatif, est détaillé ci-après.

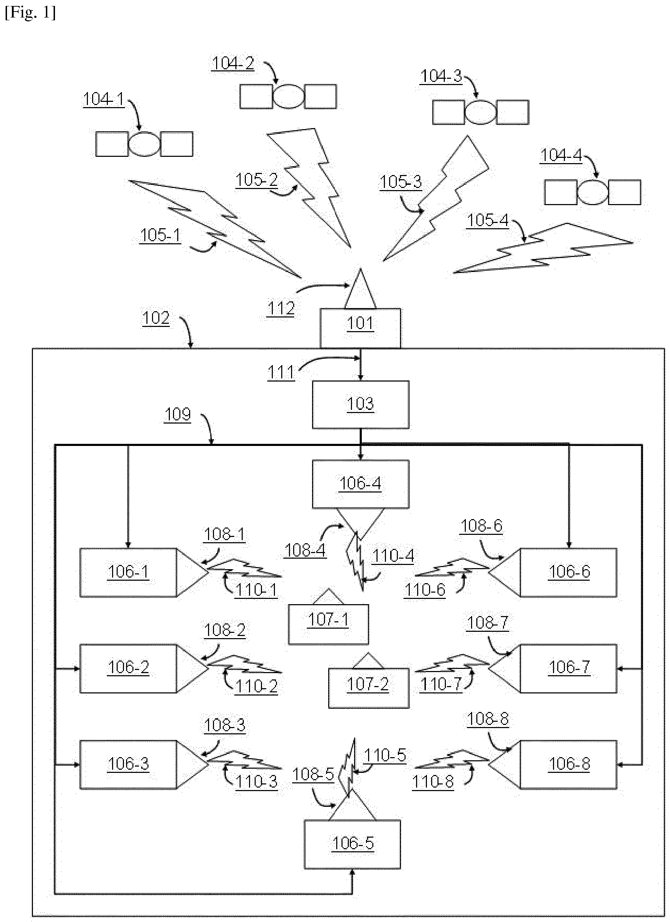

Comme illustré sur la [Fig. 1], un récepteur GNSS standard dit récepteur GNSS de référence (101) constitué d'une antenne de réception d'ondes radiofréquences dans la bande L (112) et d'un étage de traitement des signaux GNSS selon l'état de l'art est placé en un point géoréférencé situé à l'extérieur de ladite zone blanche ou grise (102) dans une zone de ciel ouvert de façon à pouvoir capter les signaux émis (105) par la plupart des satellites GNSS (104) visibles sur la zone et, de préférence, en un endroit où les mesures réalisées par le récepteur GNSS de référence (101) seront peu sujettes à des effets environnementaux pouvant les dégrader tels que, par exemple, la présence prés de l'antenne (112) de réflecteurs radioélectriques ou bien de sources d'interférences radioélectriques.

Le géoréférencement du centre de phase de l'antenne dudit récepteur GNSS de référence (101) est caractérisé par des coordonnées dans un référentiel terrestre fixe tel que le WGS-84 ou le repère ECEF et est réalisé par un moyen quelconque du domaine technique des experts géomètres, ou bien par une technique quelconque du domaine du positionnement précis par signaux GNSS, ou par toute autre technique de positionnement précis.

Ledit récepteur GNSS standard (101) reçoit les ondes radioélectriques (105) transmises par les satellites GNSS (104) visibles sur la zone via son antenne (112), puis réalise les traitements des signaux GNSS selon l'état de l'art afin de produire les observables et mesures standard, dites mesures brutes (111) produites par le récepteur GNSS de référence, ceci sur chacun des signaux reçus de chacun des satellites GNSS visibles, à savoir : 1/ les angles d'élévation et d'azimut selon lesquels le satellite émetteur est vu depuis l'endroit du centre de phase de l'antenne dudit récepteur GNSS de référence ; 2/ les paramètres d'éphéméride des satellites GNSS tels que spécifiés dans les documents normatifs ICD ; 3/ les mesures brutes de pseudodistance ; 4/ les mesures brutes de pseudovitesse ; 5/ les mesures de glissement du code sur la porteuse résultant de la différence entre la mesure d'écart Doppler réalisée sur le code et celle réalisée sur la porteuse ; 6/ les mesures brutes de phase de porteuse ; 7/ les mesures du rapport de la puissance du signal reçu sur la densité spectrale de bruit ; 8/ un signal de synchronisation sur le temps GNSS.

Lesdites mesures brutes (111) associées à chacun des satellites GNSS en visibilité (104) telles que définies ci-avant sont transmises à une plateforme de calcul, dite calculateur (103), au moyen d'un medium de communication pouvant être filaire, radioélectrique, ou tout autre moyen de transmission de données numériques.

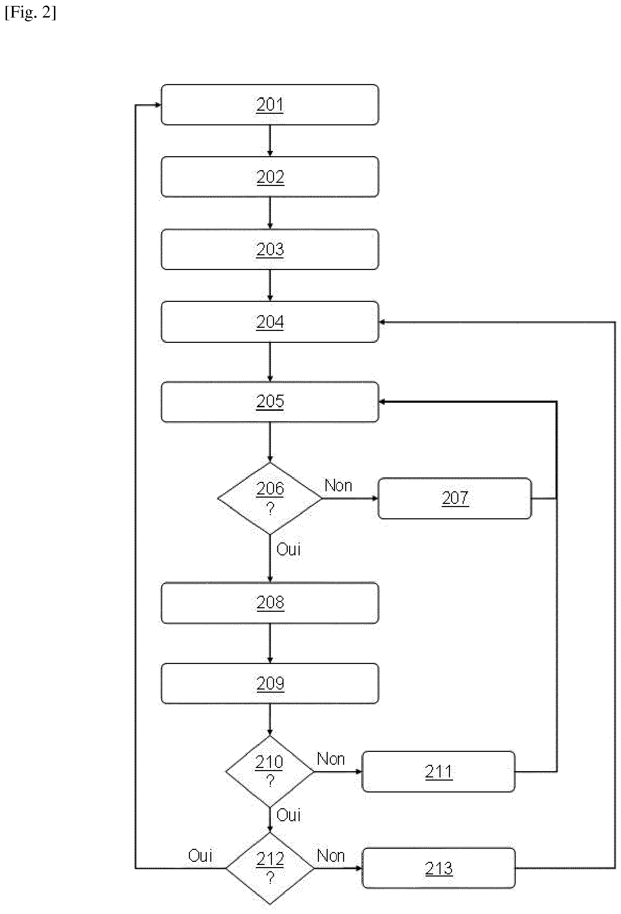

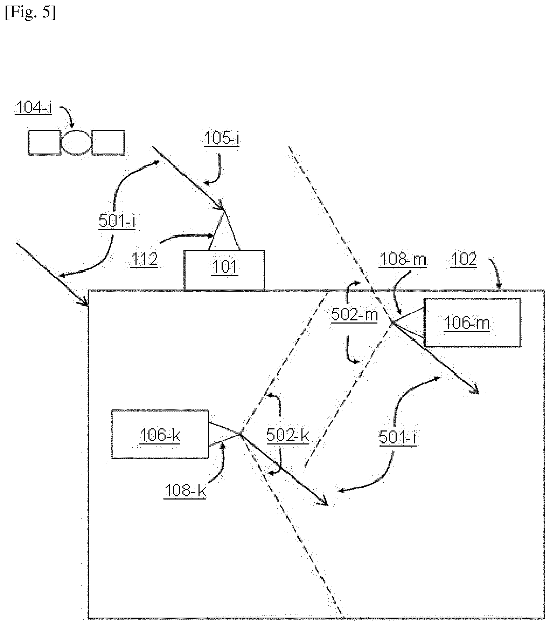

Ledit calculateur (103), réalisé sous la forme d'un système à base de microprocesseurs, microcontrôleurs, DSPs, FPGAs, CPLDs, ASICs, ou toute autre technologie ou moyen permettant l'exécution de calculs numériques selon des séquences et des algorithmes prédéterminés ou programmés dans une mémoire, réalise la séquence des opérations illustrée sur la [Fig. 2] et décrite ci-après :
- Etape 1 (201) : recevoir les mesures brutes (111) produites par le récepteur GNSS de référence (101)
- Etape 2 (202) : établir la liste des satellites GNSS visibles (104) à partir des données produites par le récepteur GNSS de référence (101). Cette liste est établie à partir des trames NMEA ou des données RINEX fournies par le récepteur de référence.
- Etape 3 (203) : établir la direction des vecteurs directeurs (501) des ondes reçues (105) depuis les satellites visibles (104) sur l'antenne (112) du récepteur GNSS de référence (101) à partir des angles d'élévation et d'azimut de chacun des satellites visibles calculés par le récepteur de référence (101) et fournis dans des trames NMEA. Pour ce faire, les angles d'élévation et d'azimut des satellites sont convertis en coordonnées dans un repère local-horizontal local-vertical comme par exemple le référentiel NED (pour North East Down). Les vecteurs directeurs sont alors déterminés en inversant le signe de ces mêmes coordonnées.
- Etape 4 (204) : pour chacun des générateurs de signaux synthétiques (106-1 à 106-k):
   - Etape 4.1 (205) : pour chacun des satellites visibles (104-1 à 104-4):
      - Etape 4.1.1 (206) : établir si le vecteur directeur (501-i) de l'onde reçue (105-i) depuis le satellite (104-i) est dans le champ de rayonnement (106-k) de l'antenne (108-k) du générateur de signaux synthétiques en question (106-k). Le champ de rayonnement correspond à l'intérieur d'un cône de surface dont le sommet se confond avec le centre de phase de l'antenne (108-k), dont l'axe de révolution est confondu avec l'axe de symétrie du lobe principal de rayonnement de l'antenne (108-k) et dont l'angle formé par l'axe de révolution et la génératrice est une caractéristique du diagramme de rayonnement de l'antenne (108-k). Pour ce faire, on calcule l'angle entre le vecteur directeur et l'axe de révolution du cône caractéristique du champ de rayonnement, puis on détermine si cet angle est plus petit ou égal à l'angle formé par l'axe de révolution et la génératrice du cône caractéristique du champ de rayonnement.
         - Etape 4.1.1.1 (207) : si non (comme c'est le cas du vecteur directeur (501-i) par rapport au champ de rayonnement (502-m) de l'antenne (108-m) du générateur (106-m) sur la [Fig. 5]): passer au satellite visible suivant à l'étape 4.1.
         - Etape 4.1.1.2 : si oui (comme c'est le cas du vecteur directeur (501-i) par rapport au champ de rayonnement (502-k) de l'antenne (108-k) du générateur (106-k) sur la [Fig. 5]):
            - Etape 4.1.1.2.1 (208) : calculer l'écart de phase (301-i,k) de l'onde (105-i) émise par le satellite visible (104-i) entre le centre de phase de l'antenne (112) du récepteur GNSS de référence (101) et le centre de phase de l'antenne (108-k) du générateur de signal synthétique (106-k). Pour ce faire, on calcule la norme du vecteur résultant de la projection orthogonale du vecteur prenant source à l'endroit du centre de phase de l'antenne dudit récepteur GNSS de référence (101) et se terminant à l'endroit du centre de phase de l'antenne (108-k) du générateur de signal synthétique (106-k) sur la droite passant par l'endroit du centre de phase de l'antenne (108-k) du générateur de signal synthétique (106-k) et qui est colinéaire au vecteur directeur calculé à l'étape 3.
            - Etape 4.1.1.2.2 (209) : transmettre au générateur de signaux synthétiques en question (106-k) le jeu de paramètres et de données requis pour générer la réplique synthétique du signal du satellite (104-i), à savoir: 1) les mesures brutes (phase de code, phase de porteuse, doppler code et porteuse et rapport de la puissance du signal sur la densité spectrale de bruit) réalisées à l'endroit du centre de phase de l'antenne (112) du récepteur GNSS de référence (101) sur le signal reçu du satellite (104-i); 2) les paramètres d'éphémérides du satellite (104-i) démodulés par le récepteur GNSS de référence (101); 3) l'écart de phase calculé à l'étape 4.1.1.2.1 de l'algorithme; 4) les coordonnées du vecteur directeur (104-i) calculé à l'étape 3 de l'algorithme ; 5) l'information de temps et le signal de synchronisation sur le temps GNSS issus du récepteur de référence.
      - Etape 4.1.2 (210) : s'agit t-il du dernier satellite visible ?
         - Etape 4.1.2.1 : si oui, passer à l'étape 4.2.
         - Etape 4.1.2.2 (211) : si non, passer au satellite suivant à l'étape 4.1.
   - Etape 4.2 (212) : s'agit t-il du dernier générateur de signaux synthétiques ?
      - Etape 4.2.1 : si oui, passer à l'étape 1.
      - Etape 4.2.2 (213) : si non, passer au générateur de signaux synthétiques suivant à l'étape 4.

Lesdites données de commande (109) sont transmises à chacun desdits générateurs de signaux synthétiques (106) à l'issue de l'étape 4.1.1.2.2 (209) de l'algorithme mis en œuvre dans ledit calculateur (103) au moyen d'un medium de communication pouvant être filaire, radioélectrique, ou tout autre moyen de transmission de données numériques ou de signaux analogiques.

L'ensemble du dispositif est synchronisé sur une horloge commune qui est distribuée au moyen d'un medium de communication pouvant être filaire, radioélectrique, ou tout autre moyen de transmission de signaux analogiques, partagé ou pas avec celui utilisé pour véhiculer lesdites données de commande (109).

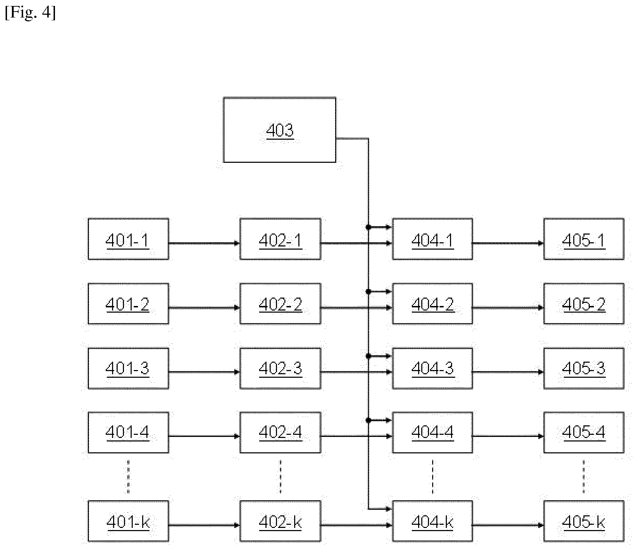

Lesdits générateurs de signaux synthétiques sont alors chargés de générer lesdits signaux synthétiques selon l'invention (110). Comme cela est illustré sur la [Fig. 4], chaque générateur de signaux radioélectriques synthétiques est constitué :
- d'un ensemble de générateurs numériques de formes d'ondes (401-1 à 401-k), réalisés sous la forme d'un ou plusieurs systèmes à base de microprocesseurs, microcontrôleurs, DSPs, FPGAs, CPLDs, ASICs, ou toute autre technologie ou moyen permettant l'exécution de calculs numériques selon des séquences et des algorithmes prédéterminés ou programmés dans une mémoire ;
- d'un ensemble de convertisseurs numérique-vers-analogique (ADC pour Digital to Analog Converter) (402-1 à 402-k), réalisé sous la forme d'un ou plusieurs systèmes à base de microprocesseurs, microcontrôleurs, DSPs, FPGAs, CPLDs, ASICs, ou toute autre technologie ou moyen permettant la conversion d'un signal numérique en un signal analogique ;
- d'un générateur de signal sinusoïdal analogique à haute fréquence (403);
- d'un ensemble de modulateurs radiofréquences (404-1 à 404-k), réalisé sous la forme d'un ou plusieurs systèmes à base de microprocesseurs, microcontrôleurs, DSPs, FPGAs, CPLDs, ASICs, ou toute autre technologie ou moyen permettant la modulation d'un signal analogique par une porteuse sinusoïdale analogique à haute fréquence, lesdits modulateurs radiofréquences permettant de moduler les signaux analogiques en sortie des ADC par des porteuses analogiques sinusoïdales aux fréquences des signaux GNSS, chacun desdits modulateurs étant associé au signal produit par un ADC ;
- d'un ensemble d'éléments rayonnants d'ondes radioélectriques (antennes d'émission) (405-1 à 405-k) dont chacun des éléments est associé au signal produit par un modulateur radiofréquence, et dont l'ensemble desdits éléments rayonnants forme une antenne à diagramme de radiation contrôlé.

Chacun des générateurs numériques de formes d'ondes (401-1 à 401-k) produit la composante du signal synthétique composite qui sera émise par un des éléments de l'ensemble d'éléments rayonnants d'ondes radioélectriques (405-1 à 405-k). Cette composante (401-i) est la somme des composantes de synthèse de chaque signal GNSS à émettre (701-1 à 701-k) par ladite borne de génération de signaux synthétiques selon l'invention, pondérées par le coefficient complexe (7011-i à 701k-i) de formation du faisceau d'émission associé à l'élément rayonnant (405-i) en question.

Chaque composante de synthèse de chaque signal GNSS à émettre (701-1 à 701-k) par ladite borne de génération de signaux synthétiques selon l'invention est générée par une fonction qui produit une version numérique et en bande de base de la forme d'onde du signal correspondant au satellite GNSS à synthétiser conformément à ses caractéristiques connues du domaine public au travers des documents normatifs ICD, et qui intègre :
- une ou plusieurs séquences pseudo-aléatoires d'étalement du spectre ;
- un schéma de modulation (BPSK, QPSK, BOC, CBOC, TMBOC, ATLBOC, ou autre) ;
- une modulation de porteuse additionnelle si le plan de fréquence du système prévoit des fréquences intermédiaires ;
- une modulation de porteuse additionnelle pour les signaux FDMA;
- des données binaires codant les paramètres du message de navigation. Les données correspondant auxdits messages propriétaires selon l'invention sont optionnellement intégrées aux données binaires codant les paramètres du message de navigation.

Chaque composante de synthèse de chaque signal GNSS à émettre (701-1 à 701-k) par ladite borne de génération de signaux synthétiques selon l'invention est générée avec les caractéristiques de phase ainsi que les caractéristiques de Doppler sur le code et sur la porteuse calculées par ledit calculateur (103) et transmises via lesdites données de commande (109). Les caractéristiques de phase correspondent à la somme de la phase du signal GNSS de référence à l'endroit du centre de phase de l'antenne dudit récepteur GNSS de référence (101) à laquelle on ajoute (s'il s'agit d'un retard de phase) ou on déduit (s'il s'agit d'une avance de phase) la variation de phase calculée et transmise par ledit calculateur (103). Les caractéristiques de Doppler sur le code et sur la porteuse sont émulées respectivement par un écart sur la vitesse de génération du code et par une modulation additionnelle par une porteuse complexe numérique.

Les valeurs des coefficients complexes de pondération et de déphasage (701j-1 à 701j-k) à appliquer pour une composante de synthèse d'un satellite GNSS (701-j) et pour chacun des éléments rayonnants (405-1 à 405-k) sont calculées en minimisant l'écart quadratique moyen entre une consigne de diagramme de rayonnement dont le gain est proportionnel à la consigne de puissance d'émission selon la direction du vecteur directeur du satellite GNSS synthétique (701-j) en question et est nul partout ailleurs, et le diagramme de rayonnement obtenu en appliquant les coefficients complexes (701j-1 à 701j-k).

Les signaux numériques produits par chacun des générateurs numériques de formes d'ondes (401-1 à 401-k) sont transformés en signaux analogiques au travers de convertisseurs numérique-vers-analogique (402-1 à 402-k) synchronisés sur l'horloge commune du système.

Les signaux analogiques sont alors modulés par une porteuse radiofréquence unique au moyen de modulateurs radiofréquence (404-1 à 404-k), de manière à être translatés de la bande de base à la bande L sur la ou les fréquences porteuses caractéristiques des systèmes GNSS connues du domaine public au travers des documents normatifs ICD. La puissance des modulateurs radiofréquence est ajustée pour que la combinaison des gains dans la chaîne de synthèse conduise à générer les signaux avec une puissance correspondant aux consignes. La porteuse analogique radiofréquence est produite par un générateur de signal sinusoïdal (403) asservi avec l'horloge commune du système.

Enfin, chacun des signaux analogiques radiofréquences est rayonné par un des éléments (405-1 à 405-k) de l'ensemble d'éléments rayonnants d'ondes radioélectriques composant l'antenne d'émission de ladite borne de génération de signaux synthétiques selon l'invention.

Lesdites bornes de génération de signaux synthétiques selon l'invention sont positionnées avantageusement les unes par rapport aux autres de manière à couvrir l'ensemble de ladite zone blanche ou grise à couvrir par le système.

La calibration desdites bornes de génération de signaux synthétiques selon l'invention est réalisée de la manière suivante :
- la position du centre de phase de l'antenne (106-k) de chacune desdites bornes de génération de signaux synthétiques selon l'invention est caractérisée par ses coordonnées dans un référentiel terrestre fixe tel que le WGS-84 ou le repère ECEF, et est déterminée au moment de l'installation ou de la réinstallation de l'équipement par un moyen quelconque du domaine technique des experts géomètres ;
- la direction de l'axe principal d'émission de l'antenne (106-k) de chacune desdites bornes de génération de signaux synthétiques selon l'invention est caractérisée par un vecteur défini par des coordonnées dans un repère local-horizontal local-vertical comme par exemple le référentiel NED, et est déterminée au moment de l'installation ou de la réinstallation de l'équipement par un moyen quelconque du domaine technique des experts géomètres.

En outre, chacune desdites bornes de génération de signaux synthétiques selon l'invention est équipée d'un axéléromètre 3-axe permettant de détecter toute modification de la position desdites bornes de génération de signaux synthétiques par comparaison du vecteur accélération courant avec celui mesuré au moment de l'installation de ladite borne de génération de signaux synthétiques, ceci afin d'éviter la génération de signaux non-conformes au procédé de l'invention en mettent automatiquement la borne hors service si un tel événement se produisait.

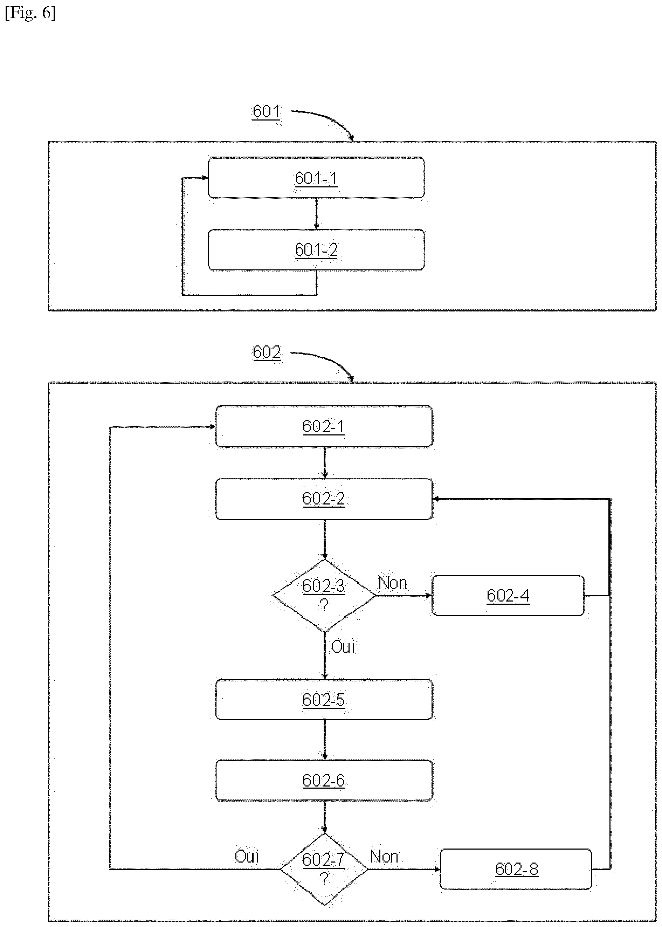

Une implémentation alternative de l'algorithme illustré sur la [Fig. 2] et décrit précédemment, est décrite ci-après. Cette alternative, illustrée sur la [Fig. 6], consiste en une distribution des calculs entre ledit calculateur (103) et lesdits générateurs de signaux synthétiques (106). La manière de réaliser les opérations dans les étapes est identique à ce qui a été décrit précédemment pour l'algorithme représenté sur la [Fig. 2], et n'est par conséquent pas repris ci-dessous. L'algorithme (601) mis en œuvre dans ledit calculateur (103) est décrit ci-après :
- Etape 1 (601-1) : recevoir les mesures brutes (111) produites par le récepteur GNSS de référence (101) ;
- Etape 2 (601-2) : transmettre aux générateurs de signaux synthétiques (106) le jeu de paramètres et de mesures produites par le récepteur GNSS de référence (101), à savoir, pour chacun des satellites visibles (104): 1) les mesures brutes (phase de code, phase de porteuse, doppler et rapport de la puissance du signal sur la densité spectrale de bruit) réalisées à l'endroit du centre de phase de l'antenne (112) du récepteur GNSS de référence (101) sur le signal reçu de chacun des satellites (104); 2) les paramètres d'éphémérides de chacun des satellites (104) démodulés par le récepteur GNSS de référence (101).

L'algorithme (602) mis en œuvre dans chacun desdits générateurs de signaux synthétiques (106) est décrit ci-après :
- Etape 0 (602-1) : recevoir le jeu de paramètres et de mesures produites par le récepteur GNSS de référence (101)
- Etape 1 : pour chacun des satellites visibles (104-1 à 104-k):
- Etape 1.1 (602-2) : établir la direction du vecteur directeur (501-i) de l'onde reçue (105-i) depuis le satellite visible (104-i) sur l'antenne (112) du récepteur GNSS de référence (101) à partir des angles d'élévation et d'azimut du satellite visible ;
- Etape 1.2 (602-3) : établir si le vecteur directeur (501-i) de l'onde reçue depuis le satellite est dans le champ de rayonnement (502-k) de l'antenne (108-k) du générateur de signaux synthétiques en question (106-k)
- Etape 1.2.1 (602-4) : si non (comme c'est le cas du vecteur directeur (501-i) par rapport au champ de rayonnement (502-m) de l'antenne (108-m) du générateur (106-m) sur la [Fig. 5]): passer au satellite visible suivant à l'étape 1 ;
- Etape 1.2.2 : si oui (comme c'est le cas du vecteur directeur (501-i) par rapport au champ de rayonnement (502-k) de l'antenne (108-k) du générateur (106-k) sur la [Fig. 5]):
   - Etape 1.2.2.1 (602-5) : calculer l'écart de phase (301-i,k) de l'onde plane (105-i) émise par le satellite visible (104-i) entre le centre de phase de l'antenne (112) du récepteur GNSS de référence (101) et le centre de phase de l'antenne (108-k) du générateur de signal synthétique (106-k) ;
   - Etape 1.2.2.2 (602-6) : transmettre à la fonction de génération de forme d'onde (401-i): 1) l'écart de phase calculé à l'étape 1.2.2.1 de l'algorithme; 2) l'angle d'incidence de l'onde émise par le satellite (104-i) calculé à l'étape 1.2 de l'algorithme.
   - Etape 1.3 (602-7) : s'agit t-il du dernier satellite visible ?
   - Etape 1.3.1 : si oui, retourner à l'étape 0 ;
   - Etape 1.3.2 (602-8) : si non, passer au satellite suivant à l'étape 1.

Une indication de la manière dont l'invention est susceptible d'application industrielle est donnée ci-après.

Le procédé et le dispositif selon la présente invention sont particulièrement destinés à la géolocalisation de personnes ou de biens à l'intérieur des bâtiments via l'utilisation de terminaux standard de navigation et localisation utilisant les signaux de radionavigation émis par les systèmes globaux de navigation par satellites (GNSS). L'invention s'adresse aux opérateurs de zones d'activités fermées ou couvertes (entièrement ou partiellement) recevant du public, des personnels, des véhicules ou des biens (tels que des centres commerciaux, des centres de stockage et de manutention de biens, des halls d'aéroport ou de gares ferroviaires ou routières, des parkings souterrains ou couverts, des centres de production, des musées, des salles de spectacles, des casinos, des halls d'exposition, des tunnels, ou de toute autre zone fermée entièrement ou partiellement), et désireux d'améliorer l'expérience de leurs utilisateurs en proposant des services d'assistance, d'information, d'automation ou de tout autre service s'appuyant sur de la géolocalisation précise au travers d'applications exécutées sur des terminaux standard intégrant la technologie de positionnement par GNSS.

## Revendications

1. Un procédé permettant la détermination de la position, de la vitesse et du temps PVT, notamment de personnes ou de biens à l'intérieur de bâtiments ou de toute zone étanche ou peu exposée aux ondes radioélectriques émises par les Systèmes Globaux de Navigation par Satellites GNSS, dite zone blanche ou grise, ceci avec des terminaux standard de navigation et localisation utilisant les signaux radioélectriques de radionavigation émis par les Systèmes GNSS, **caractérisé en ce que** :
- la détermination de la PVT est réalisée au moyen de signaux radioélectriques synthétiques non-standard, les caractéristiques sont compatibles des procédés de traitement des signaux conformes à l'état de l'art des terminaux GNSS standard ;
- lesdits signaux synthétiques sont composés de plusieurs composantes compatibles d'un ensemble de signaux GNSS réels ;
- lesdits signaux synthétiques sont contrôlés en phase et en amplitude et sont rayonnés selon un procédé, dit procédé d'émission permettant de créer des plans de phase constants selon des directions distinctes pour chacune des composantes desdits signaux synthétiques dans l'espace où le procédé est mis en œuvre ;
- ledit procédé d'émission est **caractérisé en ce que** lesdits signaux synthétiques sont rayonnés par un réseau de générateurs, dits générateurs des signaux synthétiques produisant des signaux radioélectriques composites rayonnés par des sources multifaisceaux à directivités adaptées de façon à contrôler la direction de rayonnement de chacune des composantes desdits signaux synthétiques ;
- les sources multifaisceaux sont formées par des réseaux d'éléments rayonnants de type réseau d'antenne phasé dont chacun des éléments rayonnants de chacune des antennes desdits générateurs de signaux synthétiques constituant le réseau de générateurs, transmet la somme pondérée des composantes desdits signaux synthétiques dont les coefficients complexes de pondération sont calculés de façon à donner une direction distincte et contrôlée à chacun des signaux synthétiques ;
- chacun des signaux synthétiques est généré de sorte que la phase des composantes dudit signal synthétique à l'emplacement du centre de phase de chacune des antennes desdits générateurs de signaux synthétiques émettant cette composante soit identique à la phase qu'aurait le signal réel duquel la composante dudit signal synthétique est compatible si celui-ci était visible en ces mêmes emplacements;
- lesdits générateurs de signaux synthétiques sont disposés en réseau dans l'espace selon un schéma qui assure la couverture radioélectrique totale ou partielle de l'espace où le procédé est mis en œuvre.

2. Un procédé selon la revendication 1) **caractérisé en ce que** lesdits signaux synthétiques sont générés en cohérence avec les signaux réels émis au même instant par les systèmes globaux de navigation par satellites 'GNSS' de sorte que :
- le service de positionnement peut être assuré de façon continue entre les espaces extérieur et intérieur où le procédé est mis en œuvre ;
- lesdits signaux synthétiques ne constituent pas une source d'interférence envers les signaux réels émis par les systèmes GNSS.

3. Un procédé selon les revendications 1) et 2) **caractérisé en ce que** lesdits signaux synthétiques contiennent dans les messages de navigation qu'ils véhiculent des champs de données réservés constituant desmessages propriétaires, permettant de transmettre des données associées à des services locaux.

4. Un dispositif mettant en œuvre le procédé selon les revendications 1), 2) et 3) **caractérisé en ce qu'**il est constitué :
- d'un récepteur GNSS (101), dit récepteur GNSS de référence, relié à une antenne de réception (112) de signaux radioélectriques de radionavigation (105), dite antenne du récepteur de référence, située à l'extérieur de la zone dite blanche ou grise (102) en charge de collecter lesdites mesures brutes (111) pour chacun des satellites visibles (104) ;
- d'un calculateur (103), réalisé sous la forme d'un système à base de microprocesseurs, microcontrôleurs, DSPs, FPGAs, CPLDs, ASICs, ou toute autre technologie ou moyen permettant l'exécution de calculs numériques selon des séquences et des algorithmes prédéterminés ou programmés dans une mémoire, alimenté par les données brutes (111) collectées par ledit récepteur GNSS de référence (101) au moyen d'une interface de communication filaire ou radioélectrique, et chargé de mettre en œuvre les algorithmes associés au procédé revendiqué selon les revendications 1) et 2) afin de produire lesdites données de commandes (109) desdits générateurs de signaux synthétiques (106);
- d'un ensemble de générateurs de signaux radioélectriques (106), dits générateurs de signaux synthétiques, commandés par le calculateur (103) au moyen d'une interface de communication (109) filaire ou radioélectrique, et en charge de générer lesdits signaux synthétiques (110), chaque générateur de signaux radioélectriques synthétiques (106) étant constitué :
o d'un ensemble de générateurs numériques de formes d'ondes (401-1 à 401-k), réalisé sous la forme d'un ou plusieurs systèmes à base de microprocesseurs, microcontrôleurs, DSPs, FPGAs, CPLDs, ASICs, ou toute autre technologie ou moyen permettant l'exécution de calculs numériques selon des séquences et des algorithmes prédéterminés ou programmés dans une mémoire ;
o d'un ensemble de convertisseurs numérique-vers-analogique (402-1 à 402-k), réalisé sous la forme d'un ou plusieurs systèmes à base de microprocesseurs, microcontrôleurs, DSPs, FPGAs, CPLDs, ASICs, ou toute autre technologie ou moyen permettant la conversion d'un signal numérique en un signal analogique ;
o d'un générateur de signal sinusoïdal analogique à haute fréquence (403);
o d'un ensemble de modulateurs radiofréquences (404-1 à 404-k), réalisé sous la forme d'un ou plusieurs systèmes à base de microprocesseurs, microcontrôleurs, DSPs, FPGAs, CPLDs, ASICs, ou toute autre technologie ou moyen permettant la modulation d'un signal analogique par une porteuse sinusoïdale analogique à haute fréquence;
o d'un ensemble d'éléments rayonnants d'ondes radioélectriques (405-1 à 405-k) dont chacun des éléments est associé au signal produit par un modulateur radiofréquence, et dont l'ensemble desdits éléments rayonnants forme une antenne à diagramme de radiation contrôlé.
- d'un dispositif de synchronisation des horloges de tous les éléments constituant le système.

## Patentansprüche

1. Ein Verfahren, mit dem Position, Geschwindigkeit und Zeit, PVT, bestimmt werden können, insbesondere von Personen oder Gütern innerhalb von Gebäuden oder in einem abgedichteten Bereich oder einem Bereich, der den von globalen Navigationssatellitensystemen ausgestrahlten Funkwellen nur wenig ausgesetzt ist, GNSS, und als weiße oder graue Zone bezeichnet wird, mit Standardnavigations- und Lokalisierungsterminals, die die Funksignale für die von GNSS-Systemen ausgesendete Radionavigation verwenden und wie folgt gekennzeichnet sind:
- die Bestimmung der PVT erfolgt mittels nicht standardmäßiger synthetischer Funksignale, deren Eigenschaften mit den Signalverarbeitungsverfahren kompatibel sind, die dem Stand der Technik der Standard-GNSS-Terminals entsprechen;
- die genannten synthetischen Signale bestehen aus mehreren kompatiblen Komponenten eines Satzes realer GNSS-Signale;
- die genannten synthetischen Signale werden in Phase und Amplitude gesteuert und gemäß einem Verfahren, dem Übertragungsverfahren, ausgestrahlt, wodurch es möglich ist, konstante Phasenebenen in getrennten Richtungen für jede der Komponenten der genannten synthetischen Signale in dem Raum zu erzeugen, in dem das Verfahren implementiert ist;
- das genannte Übertragungsverfahren ist **dadurch gekennzeichnet, dass** die synthetischen Signale von einem Netzwerk von Generatoren ausgestrahlt werden, wobei diese synthetischen Signalgeneratoren zusammengesetzte Funksignale erzeugen, die von Mehrstrahlquellen mit Richtcharakteristiken ausgestrahlt werden, die so angepasst sind, dass sie die Strahlungsrichtung jeder der Komponenten der genannten synthetischen Signale steuern können;
- die Mehrstrahlquellen werden durch Anordnungen von Strahlungselementen des phasengesteuerten Antennenanordnungstyps gebildet, wobei jedes der Strahlungselemente jeder der Antennen der die Generatorgruppe bildenden synthetischen Signalgeneratoren die gewichtete Summe der Komponenten der synthetischen Signale überträgt, dessen komplexe Gewichtungskoeffizienten so berechnet werden, dass jedem der synthetischen Signale eine bestimmte und kontrollierte Richtung zugeordnet wird;
- jedes der synthetischen Signale wird so erzeugt, dass die Phase der Komponenten des genannten synthetischen Signals am Ort des Phasenzentrums jeder der Antennen der genannten synthetischen Signalgeneratoren, die diese Komponente übertragen, mit der Phase des realen Signals identisch ist, dessen Komponente des genannten synthetischen Signals kompatibel ist, wenn letztere an denselben Stellen sichtbar wäre;
- die genannten synthetischen Signalgeneratoren sind in einem Netzwerk im Raum gemäß einem Diagramm angeordnet, das eine vollständige oder teilweise Funkabdeckung des Raums gewährleistet, in dem das Verfahren implementiert ist.

2. Ein Verfahren nach Anspruch 1), das **dadurch gekennzeichnet ist, dass** die synthetischen Signale in Kohärenz mit den realen Signalen erzeugt werden, die zum gleichen Zeitpunkt von den globalen Navigationssatellitensystemen GNSS übertragen werden, so dass:
- der Positionierungsservice kontinuierlich zwischen den Außen- und Innenräumen, in denen der Prozess durchgeführt wird, bereitgestellt werden kann;
- die genannten synthetischen Signale keine Störquelle für die von den GNSS-Systemen übertragenen realen Signale darstellen.

3. Verfahren nach den Ansprüchen 1) und 2), das **dadurch gekennzeichnet ist, dass** die genannten synthetischen Signale in den Navigationsnachrichten enthalten, dass sie reservierte Datenfelder übermitteln, die proprietäre Nachrichten darstellen, wodurch es möglich wird, Daten zu übertragen, die lokalen Diensten zugeordnet sind.

4. Eine Vorrichtung, die das Verfahren gemäß den Ansprüchen 1), 2) und 3) implementiert, **dadurch gekennzeichnet, dass** sie aus Folgendem besteht:
- einem GNSS-Empfänger (101), der als Referenz-GNSS-Empfänger bezeichnet wird und mit einer Empfangsantenne (112) für Funknavigationssignale (105) verbunden ist, die als Referenzempfängerantenne bezeichnet wird und sich außerhalb der sogenannten weißen oder grauen Zone (102) befindet, die für das Sammeln der sogenannten Rohmessungen (111) für jeden der sichtbaren Satelliten (104) verantwortlich ist;
- einem Computer (103), der in Form eines Systems hergestellt ist, das auf Mikroprozessoren, Mikrocontrollern, DSPs, FPGAs, CPLDs, ASICs oder anderen Technologien oder Mitteln basiert, das die Ausführung digitaler Berechnungen gemäß Sequenzen und in einem Speicher vorbestimmten oder programmierten Algorithmen erlaubt, der von den Rohdaten (111) gespeist wird, die von dem genannten Referenz-GNSS-Empfänger (101) mittels einer drahtgebundenen oder Funkkommunikationsschnittstelle erfasst wurden, und dafür verantwortlich ist, die mit dem gemäß den Ansprüchen 1) und 2) geforderten Verfahren verbundenen Algorithmen zu implementieren, um die Steuerdaten (109) der synthetischen Signalgeneratoren (106) zu erzeugen;
- einem Satz von Funksignalgeneratoren (106), die als synthetische Signalgeneratoren bezeichnet werden und vom Computer (103) über eine drahtgebundene oder radioelektrische Kommunikationsschnittstelle (109) gesteuert werden und für die Erzeugung der genannten synthetischen Signale verantwortlich sind (110), wobei jeder synthetische Funksignalgenerator (106) aus Folgendem besteht:
- einer Reihe digitaler Wellenformgeneratoren (401-1 bis 401-k), die in Form eines oder mehrerer Systeme auf der Basis von Mikroprozessoren, Mikrocontrollern, DSPs, FPGAs, CPLDs, ASICs oder anderen Technologien oder Mitteln hergestellt wurden, die die Ausführung digitaler Berechnungen gemäß Sequenzen und Algorithmen ermöglichen, die in einem Speicher vorbestimmt oder programmiert sind;
- einer Reihe von Digital-Analog-Wandlern (402-1 bis 402-k), die in Form eines oder mehrerer Systeme hergestellt wurden, die auf Mikroprozessoren, Mikrocontrollern, DSPs, FPGAs, CPLDs, ASICs oder anderen Technologien oder Mittel beruhen, die die Umwandlung eines digitalen Signals in ein analoges Signal ermöglichen;
- einem analogen sinusförmigen Hochfrequenzsignalgenerator (403);
- einer Reihe von Hochfrequenzmodulatoren (404-1 bis 404-k), die in Form eines oder mehrerer Systeme hergestellt werden, die auf Mikroprozessoren, Mikrocontrollern, DSPs, FPGAs, CPLDs, ASICs oder anderen Technologien oder Mitteln basieren, die die Modulation eines analogen Signals durch einen hochfrequenten analogen sinusförmigen Träger erlauben;
- einem Satz von Strahlungselementen von Funkwellen (405-1 bis 405-k), deren Elemente jeweils dem von einem Hochfrequenzmodulator erzeugten Signal zugeordnet sind und dessen Satz von den genannten Strahlungselementen eine Antenne mit einem Musterdiagramm kontrollierter Strahlung bildet;
- einer Vorrichtung zum Synchronisieren der Uhren aller Elemente, aus denen das System besteht.

## Claims

1. A method for determining the position, velocity and time, PVT, in particular of people or goods inside buildings or in any sealed area or any area that radioelectric waves emitted by the Global Navigation per Satellite Systems, GNSS, do not easily reach, called white or grey area, this with standard navigation and localization terminals using the radioelectric navigation signals emitted by the GNSS systems, **characterized by** the fact that:
- determining PVT is carried out by means of non-standard synthetic radio signals, the characteristics of which are compatible with the signal processing methods in accordance with the state of the art of the standard GNSS terminals;
- said synthetic signals are composed of several compatible components of a set of real GNSS signals;
- said synthetic signals are controlled in phase and in magnitude and are radiated according to a method, called transmission method, making it possible to create constant phase planes in separate directions for each of the components of said synthetic signals in the space where the method is implemented;
- said transmission method is **characterized in that** said synthetic signals are radiated by a network of generators, called generators of synthetic signals, producing composite radioelectric signals radiated by multi-beam sources with directivities adapted so as to control the direction of radiation of each of the components of said synthetic signals;
- the multi-beam sources are formed by arrays of radiating elements of phased antenna array type in which each of the radiating elements of each of the antennas of said synthetic signal generators composing the array of generators, transmits the weighted sum of the components of said synthetic signals whose the complex weighting coefficients are calculated so as to give a distinct and controlled direction to each of the synthetic signals;
- each of the synthetic signals is generated so that the phase of the components of said synthetic signal at the location of the phase center of each of the antennas of said synthetic signal generators emitting this component is identical to the phase of the real signal from which the component of said synthetic signal is compatible if the latter were visible at these same locations;
- said synthetic signal generators are arranged in a network in space according to a diagram which ensures total or partial radioelectric coverage of the space where the method is implemented.

2. A method according to claim 1) **characterized in that** said synthetic signals are generated in coherence with the real signals emitted at the same time by the global navigation satellite systems, GNSS, so that:
- the positioning service can be provided continuously between the exterior and interior spaces where the method is being used;
- said synthetic signals do not constitute a source of interference with the real signals transmitted by the GNSS systems.

3. A method according to claims 1) and 2) **characterized by** the fact that synthetic signals contain in the navigation messages they carry reserved data fields constituting proprietary messages, allowing the transmission of data associated with local services.

4. A device implementing the method according to claims 1), 2) and 3) **characterized by** the fact that it consists of:
- a GNSS receiver (101), called the reference GNSS receiver, connected to a reception antenna (112) for radioelectric navigation signals (105), called the reference receiver antenna, located outside the said white or grey area (102) in charge of collecting said raw measurements (111) for each of the visible satellites (104);
- a computer (103), implemented in the form of a system based on microprocessors, microcontrollers, DSPs, FPGAs, CPLDs, ASICs, or any other technology or means allowing digital calculations to be performed according to sequences and algorithms predetermined or programmed in a memory, fed by the raw data (111) collected by said reference GNSS receiver (101) by means of a wired or radioelectric communication interface, and responsible for implementing the algorithms associated with the claimed method according to claims 1) and 2) in order to generate said control data (109) of said synthetic signal generators (106);
- a set of radioelectric signal generators (106), called synthetic signal generators, controlled by the computer (103) by means of a wired or radioelectric communication interface (109), and responsible for generating said synthetic signals (110), each synthetic radioelectric signal generator (106) consisting of:
- a set of digital waveform generators (401-1 to 401-k), implemented in the form of one or more systems based on microprocessors, microcontrollers, DSPs, FPGAs, CPLDs, ASICs, or any other technology or means allowing the execution of digital calculations according to sequences and algorithms predetermined or programmed in a memory;
- a set of digital-to-analogue converters (402-1 to 402-k), implemented in the form of one or more systems based on microprocessors, microcontrollers, DSPs, FPGAs, CPLDs, ASICs, or any other technology or means allowing the conversion of a digital signal into an analogue signal;
- a high-frequency analog sinusoidal signal generator (403);
- a set of radiofrequency modulators (404-1 to 404-k), implemented in the form of one or more systems based on microprocessors, microcontrollers, DSPs, FPGAs, CPLDs, ASICs, or any other technology or means allowing the modulation of an analog signal by a high-frequency analog sinusoidal carrier;
- a set of radiating elements of radioelectric waves (405-1 to 405-k), each of the elements of which is associated with the signal produced by a radiofrequency modulator, and of which the set of said radiating elements forms an antenna with a controlled radiation diagram.
- a device for synchronizing the clocks of all the elements composing the system.
